(19) **Europäisches Patentamt**

**European Patent Office**

**Office européen des brevets**

(11) **EP 1 719 553 A2**

(12) **EUROPÄISCHE PATENTANMELDUNG**

(43) Veröffentlichungstag:
**08.11.2006 Patentblatt 2006/45**

(51) Int Cl.:
*B01J 12/00* (2006.01)       *B01J 35/10* (2006.01)
*B01J 35/04* (2006.01)       *F01N 3/023* (2006.01)

(21) Anmeldenummer: **06450060.6**

(22) Anmeldetag: **24.04.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **04.05.2005 AT 7712005**

(71) Anmelder: **Pankl Emission Control Systems
GmbH
8605 Kapfenberg (AT)**

(72) Erfinder:
• **Kolbeck, Christian Dr.
8600 Bruck/Mur (AT)**
• **Klawatsch, Dominikus Dr.
7203 Wiesen (AT)**

(74) Vertreter: **Wirnsberger, Gernot
Mühlgasse 3
8700 Leoben (AT)**

(54) **Hybridvorrichtung zum Entfernen von Russpartikeln aus Dieselabgasen**

(57)     Die Erfindung betrifft eine Vorrichtung zum Entfernen von Rußpartikeln aus einem Abgasstrom eines mit Diesel betriebenen Kraftfahrzeuges, umfassend ein Katalysatorelement zur zumindest teilweisen Oxidation von Stickstoffmonoxid (NO) zu Stickstoffdioxid (NO$_2$) und einen dem Katalysatorelement stromabwärts nachgeordneten Partikelfilter sowie Mittel, um den Abgasstrom durch das Katalysatorelement und den Partikelfilter zu leiten. Damit eine derartige Vorrichtung auch bei hohen Gehalten an Sulfaten und Asche im Wesentlichen verstopfungsfrei betreibbar ist und bei einem Kaltstart rasch eine Betriebstemperatur erreicht, ist gemäß der Erfindung vorgesehen, dass das Katalysatorelement ein beschichteter offenporiger Metallschaumkörper (1) und der Partikelfilter ein offenporiger keramischer Schaumkörper (2) ist.

FIG.1

EP 1 719 553 A2

**Beschreibung**

Die Erfindung betrifft eine Vorrichtung zum Entfemen von Rußpartikeln aus einem Abgasstrom eines mit Diesel betriebenen Kraftfahrzeuges, umfassend ein Katalysatorelement zur zumindest teilweisen Oxidation von Stickstoffmonoxid (NO) zu Stickstoffdioxid ($NO_2$) und einen dem Katalysatorelement stromabwärts nachgeordneten Partikelfilter sowie Mittel, um den Abgasstrom durch den Katalysator und den Partikelfilter zu leiten.

Eine derartige Vorrichtung ist beispielsweise aus der EP 0 341 832 A1 bekannt geworden und wird im Abgastrakt von dieselbetriebenen Automobilen eingesetzt, um im Abgas vorhandene Rußpartikel möglichst vollständig abzuscheiden und zu verbrennen. Bei dieser Vorrichtung wird im Abgas vorhandenes Stickstoffmonoxid (NO) an einem vorgesehenen Katalysatorelement zumindest teilweise zu Stickstoffdioxid ($NO_2$) und/oder anderen Stickstoffoxiden wie $N_2O_5$, im Folgenden allesamt vereinfacht unter dem Begriff Stickstoffdioxid zusammengefasst, oxidiert. Das derart mit Stickstoffdioxid angereicherte Abgas trifft in der Folge auf einen dem Katalysatorelement stromabwärts nachgeschalteten Partikelfilter, an welchem sich das Stickstoffdioxid mit Rußpartikeln umsetzt, welche durch den Partikelfilter bzw. am Partikelfilter festgehalten werden. Dabei können Reaktionen entsprechend den nachstehend angegebenen Reaktionsgleichungen ablaufen:

Katalysatorelement:

$$NO + \frac{1}{2}O_2 \leftrightarrow NO_2 \quad ...(1)$$

Partikelfilter: $2NO_2 + C \leftrightarrow 2NO + CO_2$ \qquad (2a)

$2NO_2 + 2C \leftrightarrow N_2 + 2CO_2$ \qquad (2b)

Das Katalysatorelement einer bekannten Vorrichtung besteht vorzugsweise aus einem keramischen Monolith, welcher mit einem Edelmetall wie Platin beschichtet ist, um im durchströmenden Abgas katalytisch unterstützt eine hohe $NO_2$-Bildung zu erreichen und einen Reaktionsumsatz zu optimieren. Ein nachgeschalteter Partikelfilter besteht aus einem Drahtgeflechtfilter (so genannter "wire mesh filter") mit einer Beschichtung aus Lanthan, Cäsium und Vanadiumpentoxid ($La/Cs/V_2O_5$), welche eine Verbrennungstemperatur von Rußpartikeln herabsetzen kann, so dass diese am Partikelfilter unterhalb der so genannten Rußzündtemperatur (etwa 550 °C) bei Temperaturen von 250 bis 400°C oxidiert bzw. verbrannt werden können.

Wenngleich mit einer bekannten Vorrichtung Rußpartikel im Idealfall auch bei niedrigen Abgastemperaturen nahezu vollständig aus einem Dieselabgas entfernt werden können, so gehen damit auch Nachteile einher.

So hat sich herausgestellt, dass bedingt durch hohe $NO_2$-Gehalte auch eine vermehrte Bildung von Sulfaten aus im Kraftstoff enthaltenen Schwefel eintreten kann, welche sich alleine oder zusammen mit ebenfalls im Abgas präsenten motorölbedingten Aschepartikeln am Katalysator und/oder Partikelfilter absetzen und dort größere Agglomerate bilden können, da Partikeln dieser Art nicht verbrannt werden können. Dies verursacht Verstopfungen im Abgasbehandlungssystem, als deren Folge es zum Aufbau eines Gegendruckes im Abgastrakt des Kraftfahrzeuges kommt, was zum Absinken einer Motorleistung führt.

Ein anderer Nachteil besteht darin, dass eine bekannte Vorrichtung bei einem Kaltstart eines Motors eine lange Anlauflaufzeit benötigt, um auf Betriebstemperatur zu kommen und ihre volle Wirkung zu erreichen.

Hier setzt die Erfindung an und setzt sich zum Ziel, eine Vorrichtung der eingangs genannten Art anzugeben, welche auch bei hohen Gehalten an Sulfaten und Asche im Abgas im Wesentlichen verstopfungsfrei betreibbar ist und bei einem Kaltstart rasch eine Betriebstemperatur erreicht.

Dieses Ziel wird bei einer gattungsgemäßen Vorrichtung dadurch erreicht, dass das Katalysatorelement ein beschichteter offenporiger Metallschaumkörper und der Partikelfilter ein offenporiger keramischer Schaumkörper ist.

Ein mit der Erfindung erzielter Vorteil ist darin zu sehen, dass aufgrund eines vorgesehenen offenporigen Metallschaumkörpers und eines gleichartigen keramischen Schaumkörpers die gesamte Vorrichtung eine dreidimensional vielfach verzweigte Porenstruktur aufweist. Dadurch ist für ein durchströmendes Abgas eine Vielzahl von möglichen Strömungswegen gegeben und potentiellen Verstopfungen durch nicht oxidierbare Partikeln, insbesondere Ascheund/oder Sulfatpartikeln, wird wirkungsvoll und kontinuierlich entgegengewirkt.

Ein anderer Vorteil der Erfindung ist dadurch gegeben, dass Abgaswärme effektiv ausnutzbar ist. Der vorgesehene Metallschaumkörper erwärmt sich beim Betrieb sehr rasch, was einerseits auf eine gute Wärmeleitfähigkeit von Metallen an sich und andererseits auf eine offenporige, im Wesentlichen durch allseitig frei zugängliche Metallstege gebildete Schaumstruktur zurückzuführen ist. Dies hat zur Folge, dass nach einem Kaltstart des Motors die gesamte Oberfläche des Metallschaumkörpers und dessen Beschichtung bereits in kurzer Zeit eine Temperatur des Abgases annimmt bzw. eine Betriebstemperatur erreicht wird und an der Beschichtung katalytisch unterstützt eine ausreichende $NO_2$-Erzeugung entsprechend Gleichung (1) erfolgen kann.

Im Vergleich mit dem vorgeschalteten Metallschaumkörper erwärmt sich der keramische Schaumkörper zwar langsamer, kann jedoch auch bei einem Kaltstart sofort seine temperaturunabhängige Funktion als Partikelfilter erfüllen und speichert aufgrund einer hohen Wärmekapazität einmal aufgenommene Wärme gut. Letzteres bringt Vorteile, wenn eine Abgastemperatur beim Betrieb eines Kraftfahrzeuges kurzzeitig absinkt, beispielsweise wenn der Motor für eine gewisse Zeitspanne im unteren Drehzahlbereich betrieben wird. Am keramischen Schaumkörper abgeschiedene Rußpartikel werden dann durch den Keramikschaumkörper auf Temperatur gehalten bzw. gebracht und können somit auch verbrannt werden, obwohl eine Abgastemperatur hierfür nicht ausreichend wäre.

Ein anderer Vorteil einer erfindungsgemäßen Vorrichtung ist darin zu sehen, dass laminar anströmendes Abgas im Metallschaumkörper verwirbelt wird. Durch diese Bildung einer turbulenten Strömung im Metallschaumkörper kommt es einerseits zu einem verbesserten Kontakt des Abgases mit der katalytisch wirksamen Beschichtung des Metallschaumkörpers, was zu einem höheren katalytischen Wirkungsgrad führt. Andererseits wird der nachgeschaltete Partikelfilter vom Abgas turbulent angeströmt und daher über dessen Querschnittsfläche gleichmäßig mit Stickstoffdioxid beaufschlagt.

An sich kann jede beliebige Beschichtung des Metallschaumkörpers gegeben sein, solange eine Stickstoffdioxidbildung katalysiert wird. Eine besonders effektive Umwandlung von Stickstoffmonoxid zu Stickstoffdioxid wird jedoch erreicht, wenn der Metallschaumkörper mit einem Edelmetall oder mehreren Edelmetallen ausgewählt aus der Gruppe bestehend aus Ruthenium, Rhodium, Palladium, Osmium, Iridium und Platin beschichtet ist.

Der keramische Schaumkörper kann grundsätzlich aus jedem beliebigen keramischen Material gebildet sein. Im Hinblick auf möglichst hohe mechanische Beanspruchbarkeit und thermische Belastbarkeit ist es bevorzugt, wenn der keramische Schaumkörper im Wesentlichen aus einem Aluminiumoxid, Cordierit oder Siliciumcarbid besteht.

Der keramische Schaumkörper kann zusätzlich mit Cerorthovanadat, Ce(III)$VO_4$, beschichtet sein. Cerorthovanadat ist eine bis zu Temperaturen von mehr als 2200 °C beständige Verbindung, welche bei direktem Kontakt mit Rußpartikeln die Verbrennungstemperatur dieser ohne weiteres auf unter etwa 350°C absenken kann. Überdies ist Cerorthovanadat eine sauerstoffspeichernde Verbindung, so dass bei Überschuss von Sauerstoff im Abgas dieser temporär gespeichert und in der Folge bei einem Mangel an Oxidationsmittel zur Verbrennung von Rußpartikeln wieder abgegeben werden kann.

Alternativ kann der keramische Schaumkörper mit einem Edelmetall oder mehreren Edelmetallen ausgewählt aus der Gruppe bestehend aus Ruthenium, Rhodium, Palladium, Osmium, Iridium und Platin beschichtet sein, um eine $NO_2$-Konzentration im keramischen Schaumkörper hoch zu halten.

In einer besonders bevorzugten Variante ist der keramische Schaumkörper mit Cerorthovanadat, Ce(III)$VO_4$, und zumindest einem Edelmetall ausgewählt aus der Gruppe bestehend aus Ruthenium, Rhodium, Palladium, Osmium, Iridium und Platin, beschichtet. Eine derartige Beschichtung lässt sich beispielsweise herstellen, indem zuerst eine Cerorthovanadat-Beschichtung durch ein wash-coat- oder Sol-Gel-Verfahren auf den keramischen Schaumkörper aufgebracht und dieser anschließend calciniert wird. Danach wird die so aufgebrachte Cerorthovanadat-Beschichtung mit einer Edelmetalllösung imprägniert und gegebenenfalls nochmals calciniert. Insgesamt entsteht damit eine Cerorthovanadat-Beschichtung, in welcher fein verteilt katalytisch aktives Edelmetall vorliegt. Dies führt dazu, dass am keramischen Schaumkörper nicht nur eine Verbrennung von Rußpartikeln katalytisch durch Cerorthovanadat unterstützt ist, sondern auch unmittelbar an bzw. in der Beschichtung des keramischen Schaumkörpers eine $NO_2$-Erzeugung erfolgen kann und ausreichend Oxidationsmittel zur vollständigen Verbrennung von Rußpartikeln zur Verfügung steht.

Aus analogen Gründen kann auch vorgesehen sein, dass die Beschichtung des Metallschaumkörpers Cerorthovanadat, Ce(III)$VO_4$, enthält.

Der Metallschaumkörper weist zweckmäßigerweise eine Porenanzahl von 3 bis 50 ppi (pores per inch) auf. Ist der Metallschaumkörper mit einer Porenanzahl von 3 bis etwa 20 ppi ausgebildet, so ist er für Rußpartikel im Wesentlichen durchlässig und der Metallschaumkörper wirkt ausschließlich als Katalysator. Ist der Metallschaumkörper mit einer Porenanzahl von 20 bis 50 ppi ausgebildet, so können Rußpartikel teilweise auch an diesem abgeschieden und verbrannt werden, so dass ein nachgeschalteter Partikelfilter entlastet ist. Dies stellt einen besonderen Vorteil dar, weil derart hohe Temperaturspitzen im Partikelfilter aufgrund intensiver Verbrennung von Rußpartikeln vermieden werden können.

Der keramische Schaumkörper, welcher primär zur Filterung von Rußpartikeln dient, weist entsprechend seiner primären Funktion als Filter für Rußpartikel eine Porenanzahl von 30 bis 80 ppi auf. Wenn eine Porosität des Metallschaumkörpers und des keramischen Schaumkörpers zwischen 70 und 98 % beträgt, wirkt sich dies im Hinblick auf eine Vermeidung von Verstopfungen und schnelle Erwärmung der Schaumkörper günstig aus.

Ein Volumen des Metallschaumkörpers und des keramischen Schaumkörpers kann grundsätzlich variabel gewählt werden. Günstig ist es, wenn der Metallschaumkörper, welcher keine oder eine geringere Filterwirkung als der keramische Schaumkörper haben soll, kürzer baut und sein Volumen 5 bis 45 % des Volumens des keramischen Schaumkörpers beträgt.

Um eine Abscheidung von Sulfaten und/oder Asche zwischen Metallschaumkörper und keramischen Schaumkörper zu vermeiden, kann vorgesehen sein, dass der Metallschaumkörper unmittelbar mit dem keramischen Schaumkörper verbunden ist.

Weitere Vorteile und Wirkungen der Erfindung ergeben sich aus dem Zusammenhang der Beschreibung und der Ausführungsbeispiele.

Im Folgenden ist die Erfindung anhand von Ausführungsbeispielen und einer Figur noch weitergehend beschrieben.

Es zeigt:

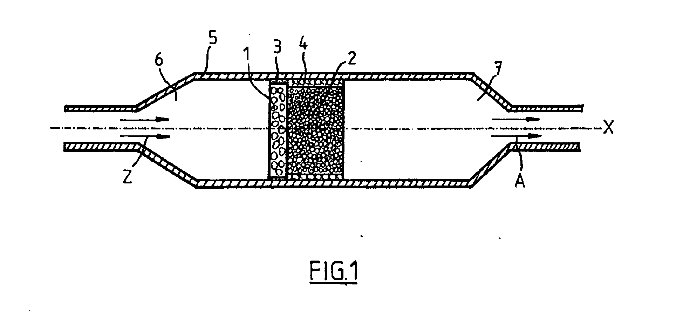

**Figur 1**: Einen Querschnitt einer erfindungsgemäßen Vorrichtung parallel zur Strömungsrichtung eines Abgases.

In Figur 1 ist eine erfindungsgemäße Vorrichtung, welche in einem Abgastrakt eines mit Diesel betriebenen Kraftfahrzeuges integriert ist, in einem Querschnitt näher dargestellt. Die Vorrichtung umfasst einen mit einem Edelmetall beschichteten offenporigen Metallschaumkörper **1,** welcher eine Porosität im Bereich von etwa 93 % und eine Porenanzahl von 40 ppi aufweist, und einen mit dem Metallschaumkörper **1** unmittelbar verbundenen offenporigen keramischen Schaumkörper **2,** dessen Porosität etwa im Bereich von 83 % liegt und der eine Porenanzahl von 50 ppi aufweist. Sowohl der Metallschaumkörper **1** als auch der keramische Schaumkörper **2** sind innerhalb eines Gehäuses **5** an dessen Wand befestigt. Der Metallschaumkörper **1** kann beispielsweise über eine Löt- oder Schweißstelle **3** mit dem Gehäuse **5** verbunden sein, wohingegen der keramische Schaumkörper **2** mittels einer Lagermatte oder Quellmatte **4** in das Gehäuse **5** eingepasst ist. Selbstverständlich ist es auch möglich, den Metallschaumkörper **1** mittels einer Lagermatte oder Quellmatte innerhalb des Gehäuses **5** zu befestigen. Gegenüber einer metallischen Verbindung von Metallschaumkörper **1** und einem metallischen Gehäuse **5** bringt dies den Vorteil, dass der Metallschaum mangels direktem metallischen Kontakt mit dem Gehäuse **5** isoliert ist und daher einmal aufgenommene Wärme besser speichert.

Von den für eine Verbindung mit dem Gehäuse **5** notwendigen Verbindungsbereichen abgesehen, ist der Metallschaumkörper **1** ebenso wie der keramische Schaumkörper **2** in seinen Abmessungen im Wesentlichen dem freien inneren Querschnitt des beispielsweise zylindrisch ausgebildeten Gehäuses **5** angepasst, um bei hoher Reinigungskraft einem Druckaufbau bestmöglich entgegenzuwirken.

Das Gehäuse **5,** wie in Figur 1 dargestellt, kann ein herkömmlicher integraler Teil des Abgastraktes eines Kraftfahrzeuges sein, beispielsweise ein Endtopf, und weist einen Einlass für zuzuführendes Abgas **Z** und einen Auslass für abzuführendes Abgas **A** auf. Der Metallschaumkörper **1** und der keramische Schaumkörper **2** sind zwischen Einlass und Auslass angeordnet und bilden zusammen eine gasdurchlässige Passage, durch welche zugeführtes Abgas **Z** vollständig hindurchströmen muss, um von einem Gaszuführungsbereich **6** zu einem Gasabführungsbereich **7** zu gelangen. Dabei wirkt der Metallschaumkörper **1** nicht nur als katalytisch aktive Einheit, sondern dient aufgrund seiner Porenstruktur, welche zur einer starken Verwirbelung des im Wesentlichen laminar anströmenden Abgases **Z** führt, auch als Turbulenzbildner und sorgt für eine gleichmäßige Anströmung des nachgeschalteten keramischen Schaumkörpers **2.** Daneben wirkt der Metallschaumkörper **1** bei einem Kaltstart auch als Schutzschild für den keramischen Schaumkörper **2:** Der Metallschaumkörper **1,** der wie der keramische Schaumkörper **2** bei einem Kaltstart vorerst Umgebungstemperatur hat, nimmt vom anströmenden heißen Abgas **Z** Wärme auf, so dass eine schonende Erwärmung des keramischen Schaumkörpers **2** erfolgt, welcher eine geringere Temperaturwechselbeständigkeit aufweist und starken Temperaturwechseln bestmöglich nicht ausgesetzt sein soll.

Ein Metallschaumkörper entsprechend Figur 1 besteht vorzugsweise aus einer Eisenbasislegierung, welche hohe Beständigkeit gegen Korrosion und eine gute Temperaturbeständigkeit aufweist. Legierungen, welche diese Erfordernisse erfüllen, sind AISI 314 (DIN Werkstoff-Nr. 1.4841) oder FeCrAlY-Legierungen (z.B. mit einer Zusammensetzung, in Gewichtprozent, von 20 bis 25 % Chrom, 5 bis 20 % Aluminium, bis 1 % Mangan, bis 1 % Silicium, bis 1 % Yttrium, bis 0.77 % Kohlenstoff, Rest Eisen und herstellungsbedingte Verunreinigungen). Der keramische Schaumkörper kann beispielsweise aus Cordierit, $Mg_2Al_3[AlSi_5O_{18}]$, bestehen. Eine Herstellung der metallischen bzw. keramischen Schaumkörper kann erfolgen, indem ein offenporiger Polyurethanschaum mit genau definierter Porengröße mit einer Suspension aus Metall- oder Keramikpulver, Wasser, Binder, Antischaummittel, Dispergierhilfsmittel und wahlweise weiteren Additiven imprägniert wird und anschließend getrocknet und danach unter Schutzgas gesintert wird, wobei der als Negativ dienende Polyurethanschaum ausgebrannt wird. Abschließend wird eine gewünschte Beschichtung aufgebracht.

Vorrichtungen der vorstehend beschriebenen Art wurden zusammen mit Vergleichsvorrichtungen im Hinblick auf ihre Eigenschaften beim Betrieb untersucht; detaillierte Daten zu den untersuchten Vorrichtungen sind in der Tabelle 1 angeführt.

Allen in der Tabelle 1 angegebenen Vorrichtungen wurde bei gleicher Versuchsdauer (50 Stunden) und unter gleichen Bedingungen Abgas eines Dieselmotors zugeführt. Dabei wurde der Dieselmotor bei allen Versuchen nach einem festgelegten, standardisierten Fahrzyklus belastet und die Vorrichtungen 1 bis 6 während und nach des Betriebes im Hinblick auf ihr Betriebsverhalten untersucht, wobei folgende Ergebnisse erhalten wurden:

Während des Betriebes wurde bei allen Vorrichtungen eine Rußfangrate bzw. Abscheidungsrate für Rußpartikel von zumindest 70 Masse-% und eine Konversion von Rußbestandteilen des Abgases im Ausmaß von zumindest 95 % festgestellt, so dass entsprechende Mindestanforderungen an eine Rußpartikelentfernung von allen Vorrichtungen erfüllbar sind.

Im Unterschied zu den Vorrichtungen 4 bis 6, war bei den erfindungsgemäßen Vorrichtungen 1 bis 3 ein verbessertes Betriebsverhalten bei einem Kaltstart gegeben. So wurden unmittelbar nach Kaltstart bei den Vorrichtungen 1 bis 3 auslassseitig ein niedrigerer Rußpartikelausstoß und niedrigere NO-Konzentrationen festgestellt, was auf eine effektive Umsetzung entsprechend Gleichung 1 und 2 bereits kurze Zeit nach dem Motorstart schließen lässt. Damit im Zusammenhang scheint auch ausschlaggebend zu sein, dass sich Katalysatoren der Vorrichtungen 1 bis 3, wie Temperaturmessungen an diesen ergeben haben, rasch auf Abgastemperatur erwärmen, wohingegen diese Erwärmung bei Katalysatoren der Vorrichtungen 4 bis 6 vergleichsweise verzögert war.

Nach der Versuchsdauer von 50 Stunden wurden die Vorrichtungen mit Hilfe lichtmikroskopischer und analytischer Techniken auf unverbrannte Rückstände, insbesondere Sulfat- und Ascherückstände, untersucht. Dabei zeigte sich, dass in den Vorrichtungen 4 bis 6 merkliche Anteile an Asche- und Sulfatrückständen vorhanden waren, während die Vorrichtungen 1 bis 3 nahezu frei von derartigen Rückständen waren. Dies zeigt, dass erfindungsgemäße Vorrichtungen 1 bis 3 sich im dauerhaften Betrieb zur kontinuierlichen Entfernung und Verbrennung von Rußpartikel aus Abgas eignen, ohne dass die Gefahr einer Verstopfung durch Asche- und/oder Sulfatpartikel gegeben ist.

In der nachstehenden Tabelle 1 sind Aufbau der Vorrichtungen 1 bis 6 und die mit diesen Vorrichtungen erzielten Versuchsergebnisse qualitativ zusammengestellt.

**Tabelle 1**

| | Beispiel | | | | | |
|---|---|---|---|---|---|---|
| | 1 (Erfindung) | 2 (Erfindung) | 3 (Erfindung) | 4 (Vergleich) | 5 (Vergleich) | 6 (Vergleich) |
| **Katalysatorelement** | Beschichteter Metallschaumkörper | Beschichteter Metallschaumkörper | Beschichteter Metallschaumkörper | Keramischer DOC* | Keramischer DOC* | Keramischer DOC* |
| Zusammensetzung | $FeCr_{25}Ni_{20}Si_2Mn_1$ | $FeCr_{23}Al_6Y_{0.2}$ | $FeCr_{23}Al_{10}Y_{0.4}$ | Cordierit | Cordierit | Cordierit |
| Volumen [$dm^3$] | 12 | 12 | 9 | 8 | 12 | 12 |
| Porenanzahl [ppi] | 30 | 40 | 40 | 400 cpsi** | 300 cpsi** | 400 cpsi** |
| Porosität [%] | 93 | 93 | 93 | 20 | 20 | 20 |
| Beschichtung | Pt | Pt | Pt/Pd | Pt | Pt | Pt |
| **Partikelfilter** | Keramischer Schaumkörper | Keramischer Schaumkörper | Keramischer Schaumkörper | Keramischer Wall-flow-Filter | Keramischer Schaumkörper | Sintermetall |
| Zusammensetzung | Cordierit | Cordierit | $Al_2O_3$ | Cordierit | $Al_2O_3$ | FeCrAlY |
| Volumen [$dm^3$] | 8 | 8 | 12 | 12 | 8 | 10 |
| Porenanzahl [ppi] | 50 | 50 | 50 | 200 cpsi | 50 | --- |
| Porosität [%] | 83 | 83 | 83 | 50 | 83 | 60 |
| Beschichtung | --- | Pt | Ce(III)VO$_4$/Pt | --- | --- | --- |
| | | | | | | |
| Rückstande (Sulfat-/Ascherückstände) | A | A | A | E | D | D |
| Wirkungsgrad unmittelbar nach Kaltstart | B | B | A | E | E | E |
| Wärmemanagementverhalten | A | A | A | C | D | D |
| * DOC...handelsüblicher Dieseloxidationskatalysator, **cpsi...cells per square inch | | | | | | |

Skala A bis E:

A...hervorragend, B...gut, C...befriedigend, D...noch geeignet, E...nicht akzeptabel.

Es versteht sich, dass es im Rahmen der Erfindung auch möglich ist, mehrere erfindungsgemäße Vorrichtungen parallel oder seriell zu schalten, um eine Abgasreinigung zu optimieren. Auch ist es möglich, die elektrische Leitfähigkeit des Metallschaumkörpers auszunutzen und diesen mit geringem Energieaufwand zu beheizen.

**Patentansprüche**

1. Vorrichtung zum Entfernen von Rußpartikeln aus einem Abgasstrom eines mit Diesel betriebenen Kraftfahrzeuges, umfassend ein Katalysatorelement zur zumindest teilweisen Oxidation von Stickstoffmonoxid (NO) zu Stickstoffdioxid ($NO_2$) und einen dem Katalysatorelement stromabwärts nachgeordneten Partikelfilter sowie Mittel, um den Abgasstrom durch das Katalysatorelement und den Partikelfilter zu leiten, **dadurch gekennzeichnet, dass** das Katalysatorelement ein beschichteter offenporiger Metallschaumkörper (1) und der Partikelfilter ein offenporiger keramischer Schaumkörper (2) ist.

2. Vorrichtung nach Anspruch 1, **dadurch gekennzeichnet, dass** der Metallschaumkörper (1) mit einem Edelmetall oder mehreren Edelmetallen ausgewählt aus der Gruppe bestehend aus Ruthenium, Rhodium, Palladium, Osmium, Iridium und Platin beschichtet ist.

3. Vorrichtung nach Anspruch 1 oder 2, **dadurch gekennzeichnet, dass** der keramische Schaumkörper (2) im Wesentlichen aus einem Aluminiumoxid, Cordierit oder Siliciumcarbid besteht.

4. Vorrichtung nach einem der Ansprüche 1 bis 3, **dadurch gekennzeichnet, dass** der keramische Schaumkörper (2) mit Cerorthovanadat, Ce(III)$VO_4$, beschichtet ist.

5. Vorrichtung nach einem der Ansprüche 1 bis 4, **dadurch gekennzeichnet, dass** der keramische Schaumkörper (2) mit einem Edelmetall oder mehreren Edelmetallen ausgewählt aus der Gruppe bestehend aus Ruthenium, Rhodium, Palladium, Osmium, Iridium und Platin beschichtet ist.

6. Vorrichtung nach einem der Ansprüche 1 bis 4, **dadurch gekennzeichnet, dass** der keramische Schaumkörper (2) mit Cerorthovanadat, Ce(III)$VO_4$, und zumindest einem Edelmetall ausgewählt aus der Gruppe bestehend aus Ruthenium, Rhodium, Palladium, Osmium, Iridium und Platin, beschichtet ist.

7. Vorrichtung nach einem der Ansprüche 1 bis 6, **dadurch gekennzeichnet, dass** die Beschichtung des Metallschaumkörpers (1) Cerorthovanadat, Ce(III)$VO_4$, enthält.

8. Vorrichtung nach einem der Ansprüche 1 bis 7, **dadurch gekennzeichnet, dass** der Metallschaumkörper (1) eine Porenanzahl von 3 bis 50 ppi aufweist.

9. Vorrichtung nach einem der Ansprüche 1 bis 8, **dadurch gekennzeichnet, dass** der keramische Schaumkörper (2) eine Porenanzahl von 30 bis 80 ppi aufweist.

10. Vorrichtung nach einem der Ansprüche 1 bis 9, **dadurch gekennzeichnet, dass** eine Porosität des Metallschaumkörpers (1) und des keramischen Schaumkörpers (2) zwischen 70 und 98 % beträgt.

11. Vorrichtung nach einem der Ansprüche 1 bis 10, **dadurch gekennzeichnet, dass** ein Volumen des Metallschaumkörpers (1) 5 bis 45 % des Volumens des keramischen Schaumkörpers (2) beträgt.

12. Vorrichtung nach einem der Ansprüche 1 bis 11, **dadurch gekennzeichnet, dass** der Metallschaumkörper (1) unmittelbar mit dem keramischen Schaumkörper (2) verbunden ist.

FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 0341832 A1